# EUROPÄISCHE PATENTSCHRIFT

(11) **EP 2 196 282 B1**
(45) Veröffentlichungstag und Bekanntmachung des Hinweises auf die Patenterteilung: **28.09.2011**
(21) Anmeldenummer: 09176121.3
(22) Anmeldetag: 16.11.2009
(51) Int. Cl.: B23Q 11/00

(54) **Werkzeugsystem**
Tool system
Système d'outil

(30) Priorität: 10.12.2008 DE 102008054489
(43) Veröffentlichungstag der Anmeldung: 16.06.2010
(73) Patentinhaber: HILTI Aktiengesellschaft, 9494 Schaan (LI)
(72) Erfinder: Melzer, Lars, 86978 Hohenfurch (DE); Celi, Ivo, 9492 Eschen (LI)

(56) Entgegenhaltungen:
- EP-A1- 0 377 100
- EP-A1- 1 240 976
- EP-A1- 1 391 263
- EP-A1- 1 477 272
- EP-A2- 1 321 247

## Beschreibung

Die Erfindung betrifft ein Werkzeugsystem mit einem Elektrohandwerkzeuggerät, einer werkzeuggerätseitigen Schmutzsammeleinrichtung und mit einer Saugeinrichtung, der im Oberbegriff des Patentanspruchs 1 genannten Art.

Beim Arbeiten mit Elektrohandwerkzeuggeräten, wie z. B. mit Bohrhämmern oder mit Trenn- und Schleifgeräten, entsteht Staub, der die Umgebung verschmutzen kann. Beim Arbeiten mit Elektrohandwerkzeuggeräten, bei denen das Werkzeug während dem Bohrvorgang mit einem Fluid, wie Wasser gekühlt wird, z. B. bei Bohrgeräten mit einer Diamantbohrkrone, fällt ein schlammiger Abraum aus Wasser und Bohrstaub beziehungsweise Bohrkleins an, der die Umgebung verschmutzen kann. Unter Elektrohandwerkzeuggerät wird in diesem Zusammenhang auch ein ständergeführtes Bohrgerät verstanden, wie es beispielsweise zum Erstellen von Diamantbohrungen zur Anwendung kommt.

Es werden deshalb werkzeuggerätseitige Schmutzsammeleinrichtungen vorgesehen, in denen der beim Arbeiten anfallende Schmutz über eine Saugeinrichtung, wie beispielsweise einen Staubsauger oder ein (Bohr-) Wasser-Recyclinggerät, von der Arbeitsstelle ohne Verschmutzung der benachbarten Umgebung abgeführt wird.

Aus der DE 38 05 962 A1 ist eine an einem Schleifgerät angeordnete Absaughaube als Schmutzsammeleinrichtung bekannt, die einen Anschluss für einen Saugschlauch zum Abführen des beim Schleifen anfallenden Staubes aufweist.

Aus der GB 441,351 A ist eine an einem Meisselhammer angeordnete Absaughaube als Schmutzsammeleinrichtung bekannt, die einen Anschluss für einen Saugschlauch zum Abführen des Staubes und der Materialstücke aufweist, die beim Meisseln anfallen.

Aus der US 6,053,674 ist eine separate Absaughaube als Schmutzsammeleinrichtung mit einer Durchführöffnung für ein Werkzeug eines Bohrhammers bekannt, die zusätzlich einen Anschluss für einen Saugschlauch zum Abführen des beim Bohren anfallenden Staubes und Bohrkleins aufweist.

Aus der DE 88 13 719 U1 ist ein Auffangring als Schmutzsammeleinrichtung für ein wassergekühltes Werkzeug eines Bohrgerätes bekannt, der einen Anschluss für einen Saugschlauch zum Abführen des beim Bohren anfallenden schlammigen Abraums aufweist.

Aus der FR 2 690 328 A1 ist ein Staubsauger als Saugeinrichtung bekannt, welche zum Abführen des in der werkzeuggerätseitigen Schmutzsammeleinrichtung anfallenden Schmutzes geeignet ist.

Nachteilig an den bekannten Lösungen ist, dass das Elektrowerkzeuggerät und die Saugeinrichtung für den Betrieb separat gespiesen werden müssen und daher mehrere Kabel getrennt voneinander auf der Baustelle geführt werden müssen. Neben dem mühsamen Handling des Werkzeugsystems sind zudem mehrere Anschlüsse zum Betrieb des Werkzeugsystems erforderlich.

Aus der EP 0 377 100 A1 ist ein Werkzeugsystem mit einem Elektrohandwerkzeuggerät, einer werkzeuggerätseitigen Schmutzsammeleinrichtung und einer Saugeinrichtung zum Abführen des anfallenden Schmutzes bekannt. An der Saugeinrichtung ist ein elektrischer Ausgang für eine elektrische Leitung zur Stromversorgung des Elektrohandwerkzeuggerätes vorgesehen. Nachteilig an der bekannten Lösung ist, dass eine externe Stromquelle erforderlich ist und nur Wechselstrom-betriebene Elektrohandwerkzeuggeräte an den elektrischen Ausgang der Saugeinrichtung angeschlossen werden können.

Aufgabe der Erfindung ist es, ein gattungsgemässes Werkzeugsystem zu schaffen, das die vorgenannten Nachteile nicht aufweist und an das Wechselstrom-betriebene Elektrohandwerkzeuggeräte und Gleichstrom-betriebene Elektrohandwerkzeuggeräte angeschlossen werden können.

Die Aufgabe ist durch die Merkmale des unabhängigen Anspruchs gelöst. Vorteilhafte Weiterbildungen sind in den Unteransprüchen dargelegt.

Gemäss der Erfindung weist die Saugeinrichtung einen Stromspeicher und einen Wechselstrom-/Gleichstromwandler auf, der einen Wechselstrom in einen Gleichstrom bzw. einen Gleichstrom in einen Wechselstrom umwandelt. An dem elektrischen Ausgang der Saugeinrichtung steht vorteilhaft Gleichstrom zur Verfügung, welcher einen Betrieb eines Gleichstrom-betriebenen Elektrohandwerkzeuggerätes ermöglicht. Des Weiteren werden an ein mit Gleichstrom-betriebenes Elektrohandwerkzeuggerät geringere sicherheitstechnische Anforderungen gestellt als an ein nur mit Wechselstrom-betriebenes Elektrohandwerkzeuggerät.

Das Elektrohandwerkwerkzeug wird mit seiner elektrischen Leitung direkt an dem elektrischen Ausgang der Saugeinrichtung angeschlossen, weshalb der elektrische Ausgang vorzugsweise als weiblicher Steckerteil ausgebildet ist, der entsprechend zur Aufnahme eines herkömmlichen beziehungsweise landesüblichen männlichen Steckerteils ausgebildet ist, das an der elektrischen Leitung des Elektrohandwerkzeuggerätes vorgesehen ist. Das Elektrohandwerkzeuggerät ist ein Teil des Werkzeugsystems und somit mit diesem verwendbar. Andererseits kann das Elektrohandwerkzeuggerät bedarfsweise auch autonom verwendet werden, indem es an einem Netzanschluss angeschlossen und somit über diesen gespiesen wird.

Die Saugeinrichtung weist einen Stromspeicher auf, der beispielsweise eine Batteriezelleneinheit oder Akkuzelleneinheit umfasst. Das Elektrohandwerkzeuggerät wird beispielsweise direkt von dem Stromspeicher gespiesen. Alternativ oder ergänzend dient der Stromspeicher der Speisung der Saugeinrichtung, womit die Saugeinrichtung sowie das Elektrohandwerkzeuggerät auch ohne eine externe Stromquelle betreibbar sind. Der Stromspeicher gibt vorteilhaft eine Gleichspannung ab, welche einen Betrieb eines Gleichstrom-betriebenen Elektrohandwerkzeuggerätes ermöglicht, wie es beispielsweise als Akkugerät bekannt ist.

Der Stromspeicher ist beispielsweise von der Saugeinrichtung abnehmbar ausgebildet und kann an einem anderen Gleichstrom-betriebenen Elektrohandwerkgerät angeordnet werden. Beispielsweise kann der Stromspeicher an einem Gleichstrom-betriebenen Elektrohandwerkzeuggerät, wie ein Akkugerät, angeordnet werden und dieses direkt speisen. Mit einem Gleichstrom-betriebenen Elektrohandwerkzeuggerät lassen sich die elektrischen Verluste bei der Durchleitung der elektrischen Energie reduzieren, da die Umwandlung von einer Gleichstromspannung, wie sie von einem Stromspeicher üblicherweise zur Verfügung gestellt wird, in eine Wechselstromspannung verlustbehaftet ist

Bevorzugt weist die Saugeinrichtung ein Ladegerät zum Laden des Stromspeichers auf, womit der Stromspeicher nach seiner Entladung wieder aufladbar ist. Das Ladegerät ist vorteilhaft mit einer mit einem Netzanschluss verbindbaren Eingangsleitung der Saugeinrichtung verbunden.

Bevorzugt ist eine Umschalteinrichtung zur wahlweisen Bereitstellung von Wechselstromspannung oder Gleichstromspannung an dem elektrischen Ausgang vorgesehen, womit an dem elektrischen Ausgang der Saugeinrichtung wahlweise ein Gleichstrom-betriebenes oder ein Wechselstrom-betriebenes Elektrohandwerkzeuggerät zur Speisung desselben angeschlossen werden kann. Die Umschalteinrichtung umfasst beispielsweise eine Schalteranordnung, um an dem elektrischen Ausgang je nach Schalterstellung die entsprechende Spannung zur Verfügung zu stellen. Alternativ weist der Steckerteil des Elektrohandwerkzeuggerätes je nach Art der Spannung zum Betrieb des Elektrohandwerkzeuggerätes eine unterschiedliche Ausgestaltung auf, so dass beim Anschluss des Steckerteils über eine Mechanik und/oder Elektronik die für den Betreib des Elektrohandwerkzeuggerätes richtige Spannungsart am elektrischen Ausgang von der Saugeinrichtung zur Verfügung gestellt wird.

Vorzugsweise sind ein erster elektrischer Ausgang zur Bereitstellung von Gleichstromspannung und ein zweiter elektrischer Ausgang zur Bereitstellung von Wechselstromspannung an der Saugeinrichtung vorgesehen. Entsprechend der erforderlichen Spannungsart des Elektrohandwerkzeuggerätes wird dieses an dem ersten oder an dem zweiten elektrischen Ausgang angeschlossen. Da üblicherweise die Steckerteile eines Gleichstrom-betriebenen und eines Wechselstrom-betriebenen Elektrohandwerkzeuggerät unterschiedlich ausgebildet sind, wird ein Fehlanschluss des Elektrohandwerkzeuggerätes ausgeschlossen.

Die Erfindung wird nachstehend anhand von Ausführungsbeispielen näher erläutert Es zeigen:
- Fig. 1: Ein erstes Ausführungsbeispiel eines Werkzeugsystems in Seitenansicht; und
- Fig. 2: ein zweites Ausführungsbeispiel eines Werkzeugsystems in Seitenansicht.

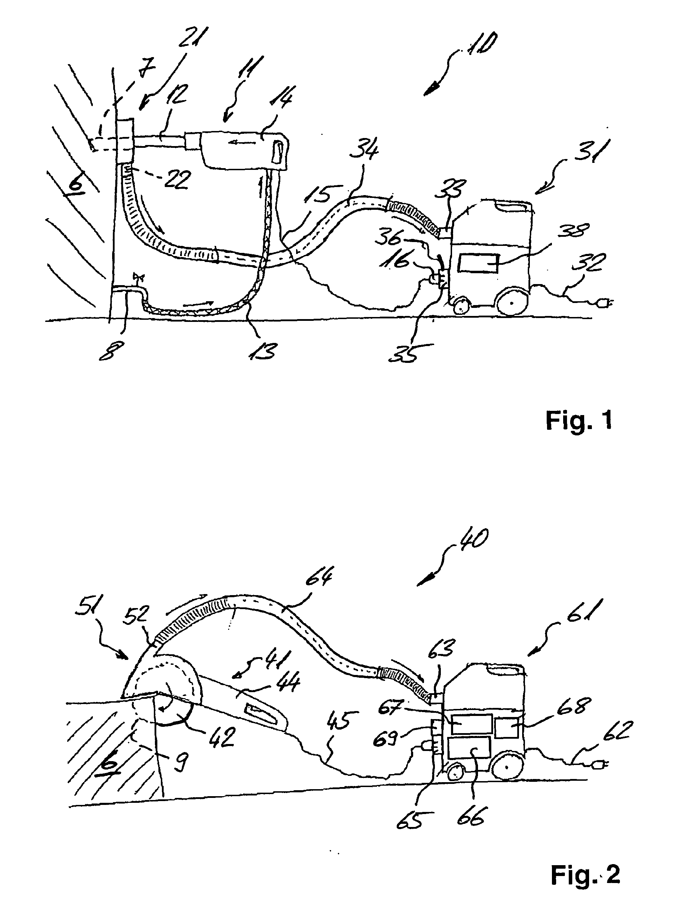

Grundsätzlich sind in den Figuren gleiche Teile mit den gleichen Bezugszeichen versehen. Das in der Figur 1 dargestellte Werkzeugsystem 10 weist ein Diamantbohrgerät als Elektrohandwerkzeuggerät 11 mit einer Diamantbohrkrone als Werkzeug 12 zum Erstellen eines Bohrlochs 7 in einer Wand als Bauteil 6 auf. Über einen an einem Wasseranschluss 8 angeordneten, mit dem Elektrohandwerkzeuggerät 11 verbundenen Wasserschlauch 13 wird während dem Bohrvorgang Wasser als Kühlmittel über das Elektrohandwerkzeuggerät 11 dem Werkzeug 12 zugeführt. Weiter ist eine sich vom Gehäuse 14 des Elektrohandwerkzeuggerätes 11 wegerstreckende elektrische Leitung 15 zur Speisung des Elektrohandwerkzeuggerätes 11 vorgesehen, die an ihrem freien Ende ein männliches Steckerteil 16 aufweist.

Der dabei entstehende schlammige Abraum, bestehend aus Wasser, Bohrmehl und allenfalls Bohrklein, wird in einem Auffangring als werkzeuggerätseitige Schmutzsammeleinrichtung 21 des Werkzeugsystems 10 aufgefangen, so dass dieser die Umgebung um das zu erstellende Bohrloch 7 nicht verschmutzt. An der als Auffangring ausgebildeten Schmutzsammeleinrichtung 21 ist ein Anschlussstutzen 22 vorgesehen.

Weiter umfasst das Werkzeugsystem 10 einen autonomen, verfahrbaren Staubsauger als Saugeinrichtung 31 zum Abführen des in der werkzeuggerätseitigen Schmutzsammeleinrichtung 21 anfallenden Schmutzes, der über eine an einem - hier nicht dargestellten - Netzanschluss angeordnete Eingangsleitung 32 gespiesen wird. Weiter ist ein Anschlussstutzen 33 an der Saugeinrichtung 31 vorgesehen, an dem das eine Ende des Saugschlauchs 34 angeordnet ist. Das andere Ende des Saugschlauchs 34 ist an dem Anschlussstutzen 22 der Schmutzsammeleinrichtung 21 angeordnet, so dass im Betrieb der Saugeinrichtung 31 der in der werkzeuggerätseitigen Schmutzsammeleinrichtung 21 anfallende Schmutz abgeführt werden kann. Weiter ist ein Wechselstrom-/Gleichstromwandler 38 vorgesehen, der den über die Eingangsleitung 32 zugeführten Wechselstrom in einem Gleichstrom umwandeln kann.

An der Saugeinrichtung 31 ist weiter ein elektrischer Ausgang 35 in Form eines weiblichen Steckerteils vorgesehen, in welches das männliche Steckerteil 16 der elektrischen Leitung 15 des Elektrohandwerkzeuggerätes 11 zur Speisung desselben angeordnet wird. An dem elektrischen Ausgang 35 ist eine hier nicht näher dargestellte Umschaltvorrichtung 36 vorgesehen, mit der in Abhängigkeit der entsprechenden Schalterstellung wahlweise Wechselstromspannung oder Gleichstromspannung an dem elektrischen Ausgang 35 zur Verfügung gestellt werden kann.

Das in der Figur 2 dargestellte Werkzeugsystem 40 weist ein Trenngerät als Elektrohandwerkzeuggerät 41 mit einer Trennscheibe als Werkzeug 42 zum Erstellen eines Schlitzes 9 in einem Bauteil 6 auf. Der dabei entstehende Staub wird in einer Absaughaube als werkzeuggerätseitige Schmutzsammeleinrichtung 51 aufgefangen, die einen Anschlussstutzen 52 zum Anschluss eines Saugschlauchs 64 aufweist. Der Saugschlauch 64 ist weiter an dem Anschlussstutzen 63 der Saugeinrichtung 61 angeschlossen, so dass der anfallende Staub über die Saugeinrichtung 61 abgeführt werden kann.

Die Saugeinrichtung 61 weist im Gegensatz zu der zuvor dargelegten Saugeinrichtung 31 einen Stromspeicher 66 in Form von Akkuzellen, beispielsweise Li-lonen- oder Li-Polymer-Akkuzellen auf. Der Stromspeicher 66 ist über ein in der Saugeinrichtung 61 vorgesehenes Ladegerät 67 wiederaufladbar. Weiter ist ein Wechselstrom-/Gleichstromwandler 68 vorgesehen, der den über die Eingangsleitung 62 zugeführten Wechselstrom in einem Gleichstrom umwandelt. Die Saugeinrichtung 61 kann einerseits über die Netzspannung und andererseits über die Spannung des Stromspeichers 66 betrieben werden.

Auch die Saugeinrichtung 31 kann mit einem Stromspeicher und/oder einem Ladegerät versehen sein (in Fig. 1 nicht dargestellt). Sofern ein Stromspeicher in der Saugeinrichtung 31 vorgesehen ist, kann die Saugeinrichtung 31 ebenfalls einerseits über die Netzspannung und andererseits über die Spannung des Stromspeichers betrieben werden.

Das Gleichstrom-betriebene Elektrohandwerkzeuggerät 41 wird über die an dem elektrischen Ausgang 65 der Saugeinrichtung 61 angeschlossenen, sich vom Gehäuse 44 des Elektrohandwerkzeuggerätes 41 wegerstreckende Leitung 45 mit Gleichstrom versorgt. Weiter ist ein zweiter elektrischer Ausgang 69 an der Saugeinrichtung 61 vorgesehen, über den eine Wechselspannung zum Betrieb eines Wechselstrom-betriebenen Elektrohandwerkzeuggerätes, wie das Elektrohandwerkzeuggerät 11 in Fig. 1, zur Verfügung gestellt wird.

## Patentansprüche

1. Werkzeugsystem mit einem Elektrohandwerkzeuggerät (11; 41), einer werkzeuggerätseitigen Schmutzsammeleinrichtung (21; 51) und mit einer Saugeinrichtung (31; 61) zum Abführen des in der werkzeuggerätseitigen Schmutzsammeleinrichtung (21; 51) anfallenden Schmutzes, wobei an der Saugeinrichtung (31; 61) ein elektrischer Ausgang (35; 65, 69) für eine sich vom Gehäuse (14; 44) des Elektrohandwerkzeuggerätes (11; 41) wegerstreckende elektrische Leitung (15; 45) zur Speisung des Elektrohandwerkzeuggerätes (11; 41) vorgesehen ist, **dadurch gekennzeichnet, dass** die Saugeinrichtung (61) einen Stromspeicher (66) und einen Wechselstrom-/Gleichstromwandler (38; 68) aufweist.

2. Werkzeugsystem nach Anspruch 1, **dadurch gekennzeichnet, dass** die Saugeinrichtung (61) ein Ladegerät (67) zum Laden des Stromspeichers (66) aufweist.

3. Werkzeugsystem nach einem der Ansprüche 1 bis 2, **dadurch gekennzeichnet, dass** eine Umschalteinrichtung (36) zur wahlweisen Bereitstellung von Wechselstromspannung oder Gleichstromspannung an dem elektrischen Ausgang (35) vorgesehen ist.

4. Werkzeugsystem nach einem der Ansprüche 1 bis 2, **dadurch gekennzeichnet, dass** ein erster elektrischer Ausgang (65) zur Bereitstellung von Gleichstromspannung und ein zweiter elektrischer Ausgang (69) zur Bereitstellung von Wechseistromspannung an der Saugeinrichtung (61) vorgesehen sind.

## Claims

1. Tool system with an electric hand tool (11; 14), a dirt collecting device (21; 51) on the tool and a suction device (31; 61) for removing the dirt occurring in the dirt collecting device (21; 51) on the tool, in which an electrical output (35; 65, 69) is provided on the suction device (31; 61) for an electrical connection (15; 45) extending from the housing (14; 44) of the electric hand tool (11; 41) to supply the electric hand tool (11; 41), **characterised in that** the suction device (61) has a battery (66) and an alternating current/direct current converter (38; 68).

2. Tool system according to claim 1, **characterised in that** the suction device (61) has a charging device (67) for charging the battery (66).

3. Tool system according to one of claims 1 to 2, **characterised in that** a switching device (36) is provided for providing alternating current or alternatively direct current to the electrical output (35).

4. Tool system according to one of claims 1 to 2, **characterised in that** a first electrical output (65) is provided to provide direct current and a second electrical output (69) is provided to provide alternating current to the suction device (61).

## Revendications

1. Système d'outil comportant un outil électrique tenu à la main (11 ; 41), un dispositif de collecte de poussière côté outil (21 ; 51) et un dispositif d'aspiration (31 ; 61) pour évacuer la poussière tombant dans le dispositif de collecte de poussière côté outil (21 ; 51), dans lequel une sortie électrique (35 ; 65, 69) est prévue sur le dispositif d'aspiration (31 ; 61) pour une ligne électrique (15 ; 45) qui s'étend en s'éloignant du boîtier (14, 44) de l'outil électrique tenu à la main (11 ; 41) pour alimenter l'outil électrique tenu à la main (11 ; 41), **caractérisé en ce que** le dispositif d'aspiration (61) comporte un accumulateur de courant (66) et un convertisseur de courant alternatif/courant continu (38 ; 68).

2. Système d'outil selon la revendication 1, **caractérisé en ce que** le dispositif d'aspiration (61) comporte un chargeur (67) pour charger l'accumulateur de courant (66).

3. Système d'outil selon l'une quelconque des revendications 1 à 2, **caractérisé qu'**un dispositif de commutation (36) est prévu pour délivrer sélectivement une tension de courant alternatif ou une tension de courant continu au niveau de la sortie électrique (35).

4. Système d'outil selon l'une quelconque des revendications 1 à 2, **caractérisé en ce qu'**une première sortie électrique (65) est prévue sur le dispositif d'aspiration (61) pour délivrer une tension de courant continu et une seconde sortie électrique (69) pour délivrer une tension de courant alternatif.
